# EUROPEAN PATENT APPLICATION

(11) **EP 4 672 111 A1**
(43) Date of publication of application: **31.12.2025**
(21) Application number: 24184322.6
(22) Date of filing: 25.06.2024
(51) Int. Cl.: G06Q 10/087

(54) **METHOD OF INSPECTING AN AUTOMATED STORAGE AND RETRIEVAL SYSTEM**

(71) Applicant: AutoStore Technology AS, 5578 Nedre Vats (NO)
(72) Inventor: Strømme, Erik, 5578 Nedre Vats (NO)
(74) Representative: Kilburn & Strode LLP

(57) **Abstract**

The disclosure relates to a method of inspecting an automated storage and retrieval system, comprising providing a container including at least one camera and a first processor, controlling a container handling vehicle to pick up the container including the at least one camera and transporting the container to a first position, controlling the camera to capture at least one image, processing the at least one image using the first processor to determine a first characteristic of the at least one image representative of the state of the automated storage and retrieval system.

## Description

### TECHNICAL FIELD

The disclosure relates to a method of inspecting an automated storage and retrieval system. More particularly, it relates to a method and a container for inspecting the state of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

It can be useful from time to time, or with an ongoing schedule, to inspect parts of the automated storage and retrieval system or other structures in the building in which the automated storage and retrieval system is located. However, the lack of aisles, shelves, or other access to workers can make inspection difficult to achieve or impossible. Inspecting the system may therefore be done at irregular or extended intervals, or not at all, leading to increased failures and unknown wear and tear of the system. Manually shutting down the automated storage and retrieval system may allow for a manual inspection. However, any shut down of the system necessarily leads to inefficient use of the system, and unknown shutdown times since it is not known what might be found during an inspection. What is needed is an improved method and systems for inspecting an automated storage and retrieval system to address these and other difficulties arising from a lack of regular inspection.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a container for inspection according to an aspect of the disclosure.
Fig. 6 shows a cutaway view of the container of Fig. 5.
Fig. 7 shows the container of Fig. 5 in a further configuration.
Fig. 8a shows a container for inspection according to an aspect of the disclosure.
Fig. 8b shows the container of Fig. 8a in a further configuration.
Fig. 9 shows a container for inspection according to an aspect of the disclosure.
Fig. 10 shows a flow chart describing steps of a method for inspection according to an aspect of the disclosure.

### DETAILED DESCRIPTION

In overview, the disclosure relates to a method for inspecting an automated storage and retrieval system. The method described herein includes using a camera and processor which are arranged within a container. This container can be transported using a container-handling vehicle. This means that the system can continue to operate whilst the inspection takes place. The captured image can be processed using a first processor which is also arranged in the container. A characteristic of the image which represents the state of the system can therefore be determined local to the container. The characteristic could for example indicate that there is a fault with a feature or element of the system. Processing at the container and only transmitting a characteristic reduces transmission traffic compared to capturing an image at the container and transmitting it elsewhere to be. This means that communications pathways can be prioritised for the communications that control the movement of the container handling vehicles and operation of the system because the data transmission of a determined/calculated characteristic is smaller than that of a whole image.

### Automated storage and retrieval system overview

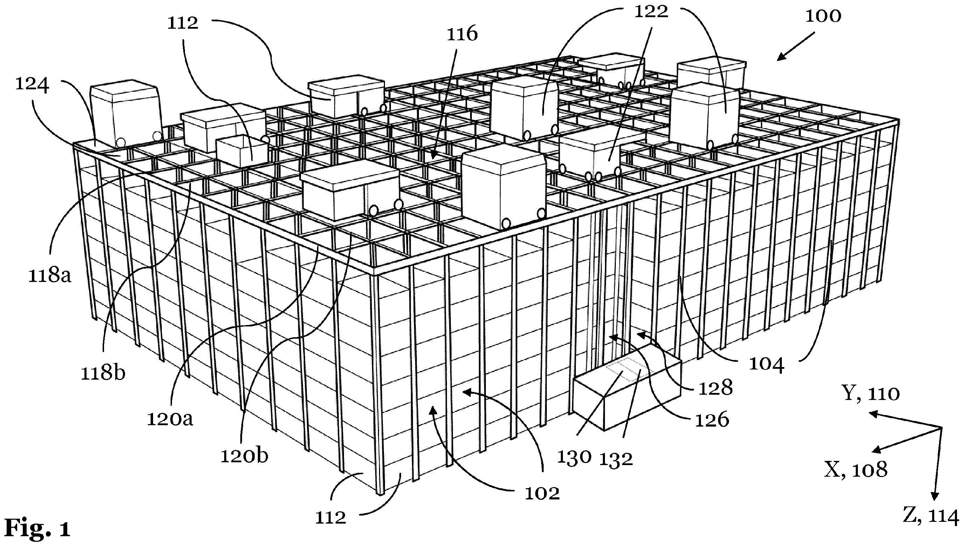

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

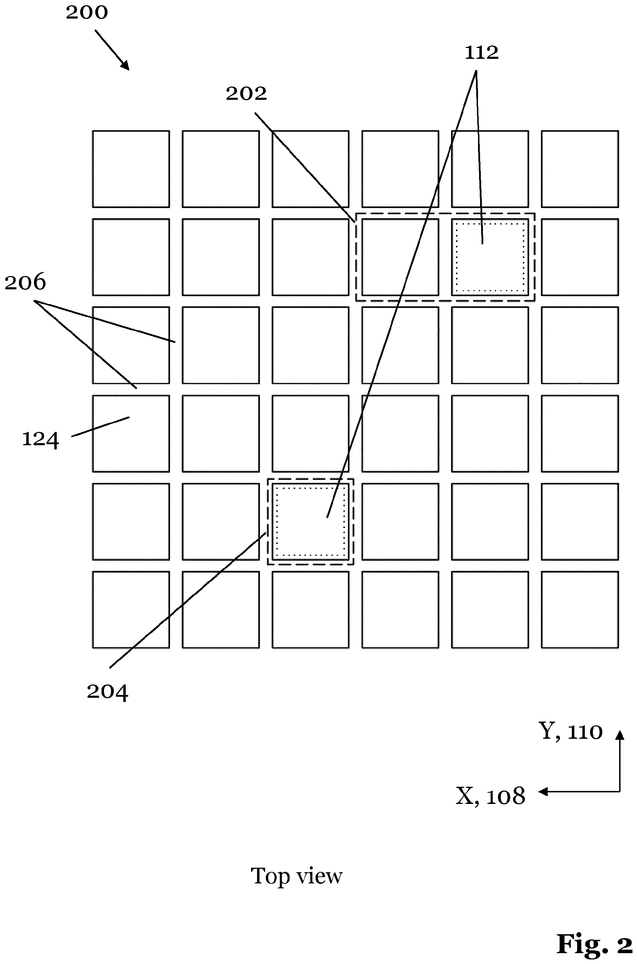

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

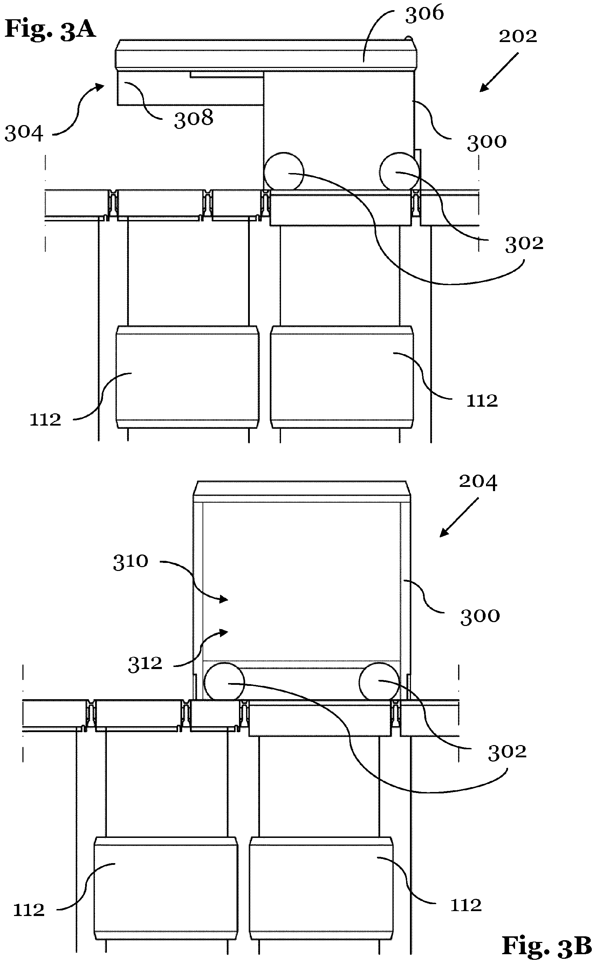

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

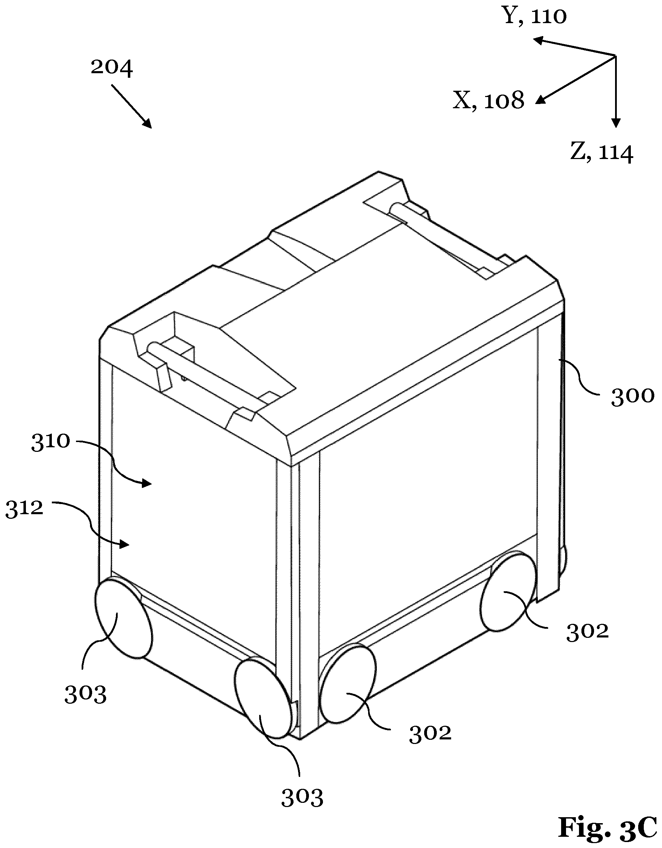

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C maybe configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

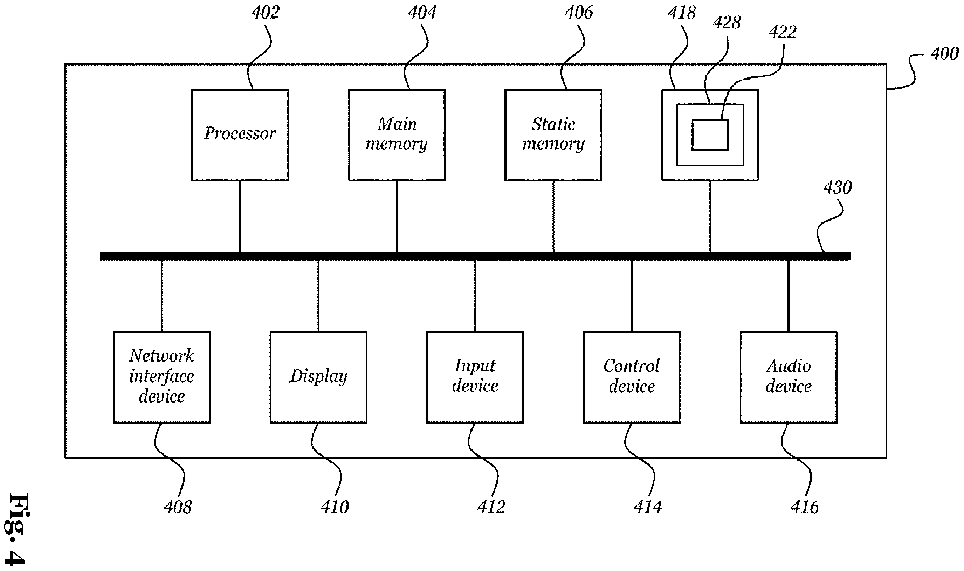

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Camera System for Inspecting an ASRS

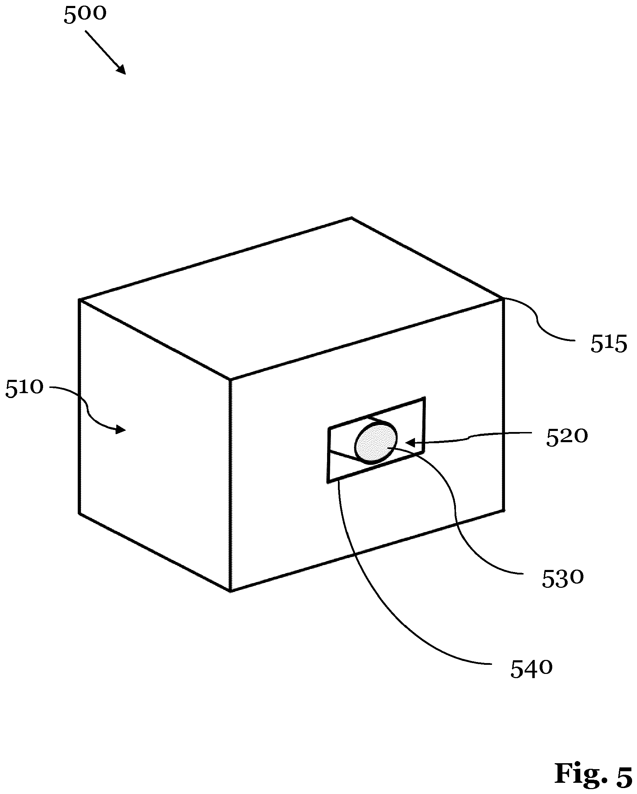

Fig. 5 shows a container 500 according to an aspect of the disclosure. The container 500 includes a plurality of walls 510 defining an interior 520. The container 500 is adapted to be lifted from above by a robot such as the robots 202, 204 described herein. In particular, the container 500 may include one or more attachment means 515 adapted to be lifted by a robot. The container 500 is provided with a first camera 530. The first camera 530 has a field of view extending outside of the container 500 such that it may record images of other parts of the ASRS. In the example shown in Fig. 5, a window 540 is provided in one wall 510 of the container 500. However, a transparent wall 510 may be provided or there may be no wall of the container 500 provided obstructing the field of view of the camera 530.

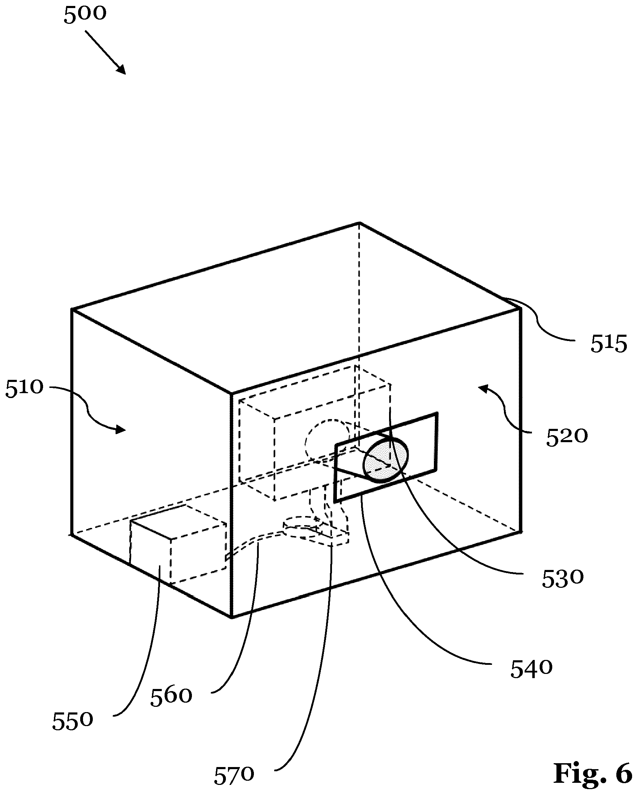

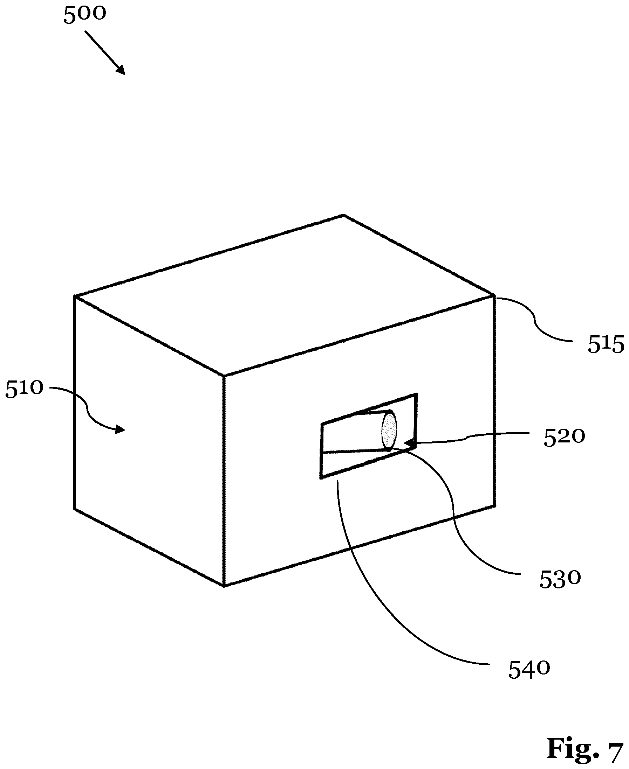

Fig. 6 shows the container 500 of Fig. 5, but with features within the interior 520 shown in broken lines to explain the additional features. As can be seen in Fig. 6, the first camera 530 is connected to a first processor 550 via a cable 560. The camera 530 and the processor 550 may each have their own power source, or they may share a power source via the cable 560. The camera 530 may be mounted on a rotatable stand or gimbal 570 such that the camera 530 may be rotated or moved about to change the field of view with respect to the container 500. For example, as shown in Fig. 7, the camera 530 has been rotated with respect to the container 500 such that it is pointing in a different direction and the field of view of the camera 530 has changed.

The first processor 550 may also include communication means, such as a wireless or radio connection to a controller or a second processor external to the container 500. The wireless or radio connection will be described in more detail with reference to the methods of operating the container system. Alternatively or additionally, the first processor 500 may have a physical or wired connection to the controller or second processor external to the container 500. Such a wired connection may be available only when the container is at a specific location, for example the container 500 may be placed at a particular port of the ASRS to download data to the second processor taking advantage of the high bandwidth available on a wired connection. The first processor 550 may alternatively have wireless connections to the second processor available in multiple frequency or operating bands. For example, the first processor 550 may be able to transmit data to the second processor over a first low bandwidth connection, and when a second relatively high bandwidth connection becomes available (due to location, signal strength, or network usage) the first processor may transmit data to the second processor over the second relatively high bandwidth connection.

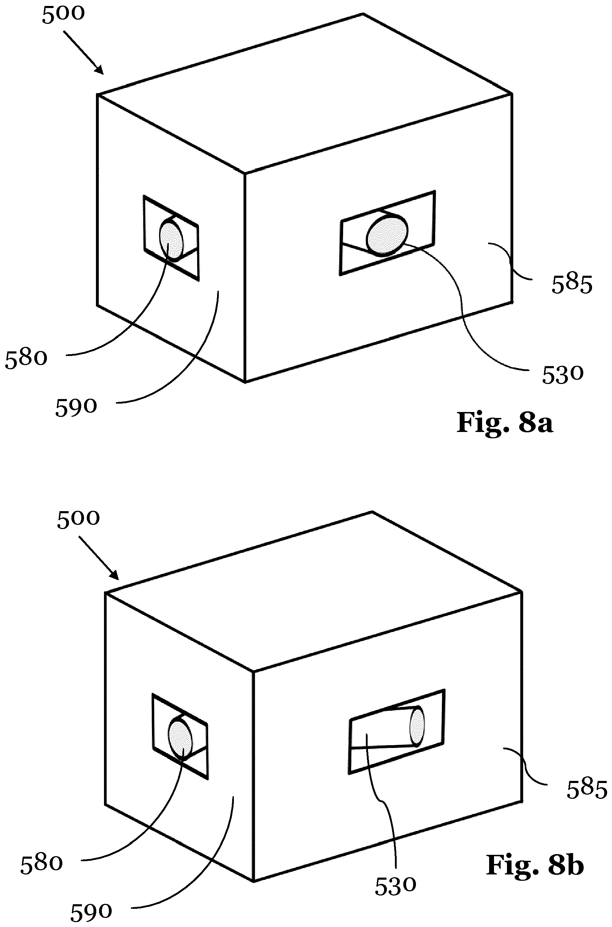

As shown in Figs. 8a and 8b, the container 500 may include more than one camera. The container 500 shown in Figs. 8a and 8b includes a first camera 530 and a second camera 580. The first camera 530 may be substantially the same as the first camera 530 of Figs. 5 to 7. The second camera 580 may be substantially the same as the first camera 530, but configured to have a different field of view to the first camera. For example, the first camera 530 may be configured to face out from one side 585 of the container 500, whereas the second camera 580 is configured to face out from a different side 590 of the container 500. The first side 585 and the second side 590 may be two perpendicular walls of the container 500. Additional cameras, such as a third, fourth, fifth, and/or sixth camera may be incorporated, each camera providing a different field of view making up a larger total field of view from the container. Some or each of the multiple cameras may be movable and/or rotatable so that the field of view can be adjusted, or the field of view of two or more cameras may be overlapped so that multiple images can be stitched together to form a complete image. As shown in Fig. 8b, the first camera 530 may be moved independently from the second camera 580.

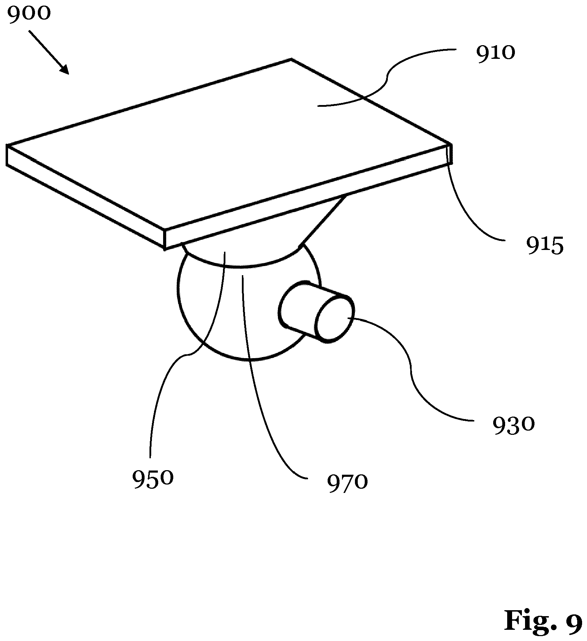

Whilst the container 500 has a similar form to the bins that would typically be used to store goods in the ASRS, it is not essential that the container takes such a form. For example, the container 900 shown in Fig. 9 does not include a base or walls to contain the camera, processor, or other components located in the interior 520. The container 900 comprises a cover 910 which supports a first camera 930 which extends below the cover 910. The cover 910 is adapted to be lifted from above by a robot such as the robots 202, 204 described herein. In particular, the container 900 may include one or more attachment means 915 adapted to be lifted by a robot 202, 204. The camera 930 is mounted on a rotatable stand or gimbal 970 such that it may be rotated or translated relative to the container 900 to provide a different field of view. The first camera 930 is connected to a first processor 950 such that the container 900 may be configured to perform the methods described herein. By providing a camera 930 supported by a top cover 910 and without a base or walls of a container 900, the camera may obtain an unobstructed field of view in many directions within the ASRS. The camera 930 may still be picked up by a robot 202, 204, and moved to a location to obtain one or more images.

The containers 500, 900 described herein may be operated in accordance with one or more methods allowing for the inspection of an ASRS, details of which are provided below.

### Methods for Inspecting an ASRS

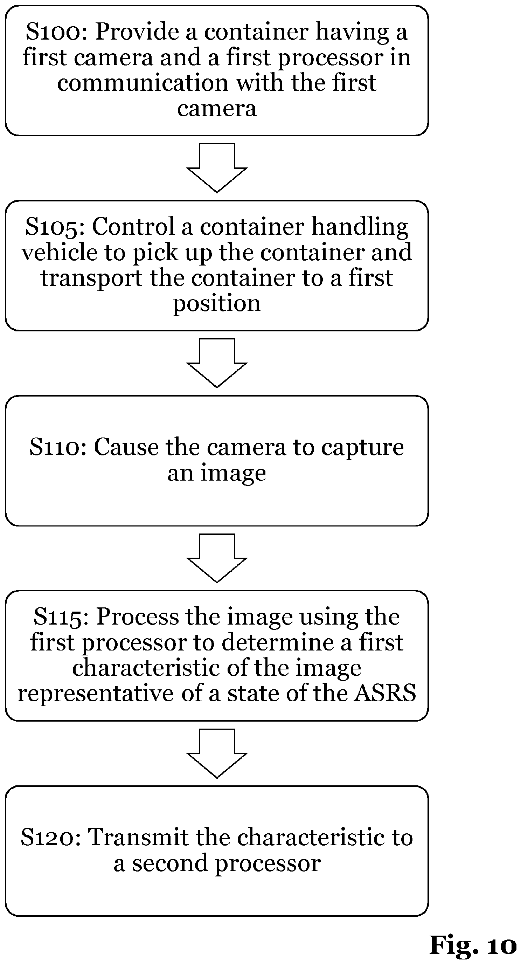

As shown in Fig. 10, the method of inspecting an automated storage and retrieval system, ASRS, includes S100 providing a container having a first camera and a first processor in communication with the first camera, S105 controlling a container handling vehicle to pick up the container and transport the container to a first position, S110 causing the camera to capture an image, and S115 processing the image using the first processor to determine a first characteristic of the image representative of a state of the ASRS. In step S100, a container is provided which has a first camera and a first processor in communication with the first camera. The container may be a container 500, 900 as described herein, or it may be any suitable container having at least a first camera and at least a first processor in communication with that first camera. In step S105, a container handling vehicle is controlled to pick up the container and transport the container to a first position. The container handling vehicle may be controlled by a central controller which is adapted to control a plurality of robots on a grid of an ASRS, or the container handling vehicle may be controlled by another controller. For example, a controller on-board the container or on board the container handling vehicle may be adapted to control the container handling vehicle to execute commands to pick up the container and transport the container to a first position. The container may be picked up from a location on a grid of the ASRS, or the container may be located at a port to be picked up and moved to a first position on the grid. Where the container is located at a port, the port may be a port which is used for storage and retrieval in the ASRS where bins containing goods may be picked or packed. Alternatively, the port may be a specialised port used explicitly for maintenance. For example, the port may be a dedicated location on the ASRS where the container may be retrieved or returned to.

The first position may correspond to a location of interest, or a location to be inspected. For example, the first position may be adjacent to a structure within the ASRS for which it is desired to inspect. Structures which may be inspected may include other robots, rails, other bins or containers, ports, supporting beams, parts of a warehouse in which the ASRS is located, or indeed any other mechanical component of the ASRS. Inspection may be particularly useful for components, parts, or systems which suffer regular wear or damage in use, for example rails may wear down or shift over time, and structures may move or shift after repeated loading, or due to inflicted damage. The first position may be a position immediately adjacent to a determined structure to be inspected, or the first position may be located such that a field of view of the camera may overlap with the structure to be inspected.

When the container is located at the first position, the container handling vehicle may leave the container in situ, or the container handling vehicle may remain at the first position with the container. The container may be left in situ for extended monitoring of a structure of interest, or to allow the container handling vehicle to attend to other tasks such as retrieving bins for storage and/or retrieval. The container handling vehicle may remain in the first position with the container for example where the container is to be moved to a second position, or further positions to inspect more structures in or around the ASRS.

The first position may be a first cell on a grid of the ASRS where the ASRS includes a grid on which the robots move. The first location may include a series of cells on the grid such that multiple images may be taken of a particular structure. For example, where the camera is to image a wall outside the grid of the ASRS or a continuous rail of the grid of the ASRS, the first location may comprise a row of grid cells which the container handling vehicle may travel along. In one scenario, the first location may be located within the grid of an ASRS, or otherwise below or above the rails on which the container handling vehicle travels. The container handling vehicle may, for example, lower the container into the grid to reach the first position. In this way, images of structures within the grid may be obtained. The state of bins within the grid may be determined without the requirement of picking those bins out of the grid.

Once the container is located at the first position, the camera may capture an image. Capture of the image may be controlled by the first processor, by the camera itself, or by any other suitable controller within the ASRS. The image may be a static image, or it may be a moving image or series of images to provide additional visual data representing the structure to be inspected. For example, the container handling vehicle may not come to a rest at the first position in order to allow the camera to capture a static image. In such a scenario, the camera may be controlled to capture a series of images or a video in order to capture visual data across a field of view greater than the static field of view of the camera. In addition, a video or series of images may provide additional information about the structure to be inspected such as dynamic faults (e.g. a rail which flexes out of position when a robot passes over it, or a sparking connector).

In capturing the image, the camera may be adjusted so that the field of view of the camera is overlapped with the subject to be inspected. The subject to be inspected may be a structure of interest. The field of view of the camera may be adjusted digitally or the field of view of the camera may be adjusted physically. Where the field of view is adjusted digitally, a subset of the image data may be selected for processing which overlaps with the structure of interest. Where the field of view is adjusted physically, the camera may be rotated and/or translated within the container by a gimbal or other actuator.

In step S115, the image is processed using the first processor to determine a first characteristic of the image representative of a state of the ASRS. The first processor receives the image data from the first camera and performs at least one process to determine a characteristic. For example, the processing may include adjusting the brightness, saturation, contrast, or any other image parameter. The processing may includes performing an image analysis such as edge detection and/or counting within the image concerned. The processing may include selecting one or more image descriptors using a machine learned model. The machine learned model may be adapted to classify images including the structures to be inspected and to describe one or more characteristics of the state of the ASRS. For example, an image classifier may be trained to detect a missing component, or a worn out component based on the appearance of the component. Training data may be obtained from images of other components that have subsequently failed or are known to have failed. In one example, the machine learned model may be a convolutional neural network. However, any machine learned model may be appropriately applied that will take the image as an input and provide one or more descriptors as an output. The descriptor may include but is not limited to, a degree of wear, a statement that a part is broken, a statement indicating the condition, or a statement indicating that a structure has a changed appearance. The processing may alternatively or additionally comprise a non-machine learned model that detects one or more characteristics of the image. For example, processing may include detecting a threshold brightness, colour, saturation, or contrast within an image.

The processing of the image may include comparing the image to a corresponding reference image. A corresponding reference image may be an earlier image taken by the camera. For example, the reference image may be an image of the structure to be inspected when it was new. As the structure degrades, additional images may begin to show signs of wear and tear. Comparing the image to the reference image allows for a characteristic to be determined indicative of the current state of the structure being different to the reference image by more than a threshold amount. For example, a rail might have been worn down over a period of time. If the image is determined to show such a difference from the reference image of the new rail that it exceeds a threshold, the characteristic may indicate that the rail is "worn". The reference image may be a reference image from an archive of similar structures. For example, an image of another robot may be used to determine if the image showing a robot at the first position deviates from the reference image by more than a predefined threshold. In one example, a robot that has fallen to the side of a rail may be imaged in the captured image. Since the appearance of the robot in the image is at an angle relative to the rails which differs from a reference image of a robot correctly positioned on rails, the characteristic determined for the image is that of a derailed robot. It will be appreciated that many different reference images and structures may be used to determine the state of the ASRS and the surrounding warehouse, and that the present disclosure is not limited to these specific examples.

In an optional further step of the method S120 the characteristic is transmitted to a second processor. The second processor may be a more powerful system than the first processor and may be located externally from the container. The second processor may be a computer workstation, a server, the controller of the ASRS, or a cloud based computer system. The characteristic of the image is used by the second processor to determine what actions should be taken in response to the characteristic and either execute those actions or notify a user that an action is required. For example, the second processor may determine that a robot on the ASRS has been derailed. The second processor may control another robot to travel to the first location and push the derailed robot back onto the rails. Alternatively, the second processor may issue a notification that there is a derailed robot, and a user is required to manually retrieve or push the derailed robot back onto the rails. The second processor may alternatively or additionally cause a change in the operation of other robots in the ASRS. For example, in response to determining the wear or degradation of a structure of the ASRS, the second processor may adjust the control of other robots on the ASRS to avoid, or completely avoid a location corresponding to the wear or degradation. Such control of other robots on the ASRS may allow maintenance to be carried out, or it may prevent further problems arising due to complete failure of a worn structure until that structure can be replaced. This may be useful in prolonging the life of structures to allow for replacement parts to be obtained or for an appropriate time to be maintained.

The characteristic may be transmitted to the second processor via a wireless or a wired connection. In some ASRS's there may be a lot of use of wireless bandwidth for other tasks such as controlling multiple robots in the ASRS. When bandwidth is used for other tasks, it may be disruptive or impractical to transmit full image data from the camera to the second processor located externally. For example, a wireless connection may be shared with signals being used to control robots. If the wireless connection is used to transmit large or high resolution images, the control of the robots may be interrupted. If the control of robots is not interrupted, the available bandwidth to transmit images may be so low as to prevent images from being transmitted in a reasonable timescale. By processing the images at the first processor and transmitting the characteristic of the image to the second processor, interruption of the communication channels used for other tasks need not be interrupted. Actions may be taken in response to those transmitted characteristics, such as initiating maintenance or adjusting the control of other robots in the ASRS, based on the interpretation of the characteristics at the second processor.

Optionally, the full data or high resolution images may be transmitted later at a more appropriate point. For example, at a time when the container has been returned from the ASRS to a port or maintenance location, the larger data files may be transmitted via a wired connection. Alternatively, or additionally, the larger data files may be transmitted to the second processor at a location where a localised wireless connection is provided. For example, the characteristic may be first transmitted over a low bandwidth connection (e.g. 2.4 GHz wireless connection) and later followed by transmission of the image over a high bandwidth or local wireless connection (e.g. 5 or 6 GHz wireless connection). The high bandwidth connection may have a shorter range than the low bandwidth connection, allowing for fast transfer of the image, whilst the low bandwidth connection may be utilised across the whole of the ASRS to transmit the characteristic. Should the low bandwidth connection permit it, a low resolution, compressed, or reduced quality version of the image may be transmitted. The low resolution, copmpressed, or reduced quality version of the image may be transmitted over the low bandwidth connection such that a user or the second processor may inspect the images without delay and without interrupting other usage of the low bandwidth connection, whilst the higher resolution, uncompressed, or high quality versions of the image may be transmitted later over the high bandwidth connection. By processing the images to produce a large size and a small size version of the images at the first processor, the interruption of the low bandwidth connection may be avoided whilst still providing inspection data to a user or to the second processor.

In processing the image, the first processor may determine a subject of the image based on the image itself (e.g. determine that an image is an image of a charger, or of a robot, etc.) and/or the subject may be determined based on the first position and known locations of subjects in the ASRS. For example, it may be predetermined that the container is transported to take an image of a charger, a port, or another robot. Since the container handling vehicle has moved the container to the first position and the field of view of the camera has been adjusted accordingly, it is known what the subject of the image should be.

It will be understood that the above methods and systems may include a container handling vehicle for an ASRS and a container according to the present disclosure, wherein the container handling vehicle is configured to pick up the container and transport the container to the first position. The first camera may be configured to be fully contained within a footprint of the container handling vehicle. In this way, the camera may be transported wherever it is possible for other robots to transport bins within the ASRS. The camera may therefore capture images from locations which are only attainable by bins of the ASRS.

It will be understood that the present disclosure encompasses an automated storage and retrieval system comprising the container handling vehicle and containers described herein configured to carry out the methods described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of inspecting an automated storage and retrieval system, ASRS, comprising:
providing a container having a first camera and a first processor in communication with the first camera,
controlling a container handling vehicle to pick up the container and transport the container to a first position,
causing the camera to capture an image, and
processing the image using the first processor to determine a first characteristic of the image representative of a state of the ASRS.

2. The method of claim 1, wherein controlling the container handling vehicle to transport the container to the first position comprises causing the container handling vehicle to travel to a first cell on a grid of the ASRS.

3. The method of claim 1 or claim 2, wherein the container handling vehicle is configured to move on top of a grid of the ASRS and controlling the container handling vehicle to transport the container to the first position comprises causing the container handling vehicle to lower the container into the grid.

4. The method of any preceding claim, wherein causing the first camera to capture at least one image comprises adjusting the field of view of the first camera to overlap with a first subject to be inspected, and optionally wherein adjusting the field of view of the first camera comprises actuating the camera to change an angle and/or position of the camera in the container, and further optionally wherein adjusting the field of view of the first camera comprises selecting a portion of the image captured by the camera.

5. The method of any preceding claim, wherein the processing the image using the first processor comprises performing an edge detection of features within the image.

6. The method of any preceding claim, wherein the processing the image using the first processor comprises selecting one or more image descriptors using a machine learned model applied to the image and wherein the first characteristic comprises the one or more image descriptors, and optionally wherein the machine learned model is a convolutional neural network.

7. The method of any preceding claim, wherein processing the image comprises comparing the image to a corresponding reference image to determine a difference, and optionally determining that the image differs from the corresponding reference image by more than a threshold difference wherein the first characteristic is an indicator that the difference exceeds the threshold.

8. The method of claim 10, wherein the corresponding reference image is a reference image obtained from the first position prior to the capture of the image, or wherein the corresponding reference image is a reference image obtained from a database of reference images corresponding to the first position.

9. The method of any preceding claim, further comprising transmitting the first characteristic to a server, wherein the server is located external to the container, and optionally wherein the first characteristic is transmitted to the server via a wireless connection.

10. The method of any preceding claim, wherein the image is transmitted to the server, optionally wherein the image is transmitted to the server via a wired connection.

11. The method of any preceding claim, further comprising transmitting a reduced size version of the image to the server, optionally wherein the reduced size version is a compressed version of the image, a reduced resolution version of the image, or a reduced quality version of the image.

12. The method of any preceding claim, wherein the step of processing the image comprises determining a subject of the image based on one or more of the location of the first position, a known location of a component of the ASRS in the ASRS, and a subject of the image determined by a machine learned model, and optionally wherein the processing of the image is modified in response to the determined subject, and optionally wherein the subject is one or more of a rail of the ASRS, a container in the ASRS, a container handling vehicle of the ASRS, a port of the ASRS, a charger of the ASRS, or any item located in the ASRS.

13. A container for an automated storage and retrieval system, ASRS, comprising
a first camera,
a first processor in communication with the camera,
wherein the camera is configured to capture an image when transported to a first location, and
the processor is configured to process the image to determine a first characteristic of the image representative of a state of the ASRS.

14. The container of claim 13, configured to perform the method according to any of claims 1 to 12.

15. A computer readable medium storing instructions that when executed cause an automated storage and retrieval system container to perform the method according to any of claims 1 to 12.
